(19) Europäisches Patentamt
European Patent Office
Office européen des brevets

(11) Veröffentlichungsnummer : **0 085 377**
**B1**

(12) # EUROPÄISCHE PATENTSCHRIFT

(45) Veröffentlichungstag der Patentschrift : **09.10.85**

(51) Int. Cl.[4] : **C 08 G 79/02**, C 08 G 65/38

(21) Anmeldenummer : **83100586.3**

(22) Anmeldetag : **24.01.83**

(54) **Phosphorhaltige Polyarylenäther.**

(30) Priorität : **30.01.82 DE 3203186**

(43) Veröffentlichungstag der Anmeldung : **10.08.83 Patentblatt 83/32**

(45) Bekanntmachung des Hinweises auf die Patenterteilung : **09.10.85 Patentblatt 85/41**

(84) Benannte Vertragsstaaten : **DE FR GB IT NL**

(56) Entgegenhaltungen :
**DE-B- 1 545 106**
**J. MACROMOL. SCI.-CHEM., A11(12), 1977, S. HASHIMOTO, I. FUROKAWA, K. UEYAMA Seiten 2167-2176**

(73) Patentinhaber : **Röhm GmbH**
**Kirschenallee Postfach 4242**
**D-6100 Darmstadt 1 (DE)**

(72) Erfinder : **Besecke, Siegmung, Dr.**
**Auf dem Kreuzberg 6**
**D-6104 Seeheim-Jugenheim (DE)**
Erfinder : **Schröder, Günter, Dr.**
**Leipziger Strasse 7**
**D-6105 Ober-Ramstadt (DE)**
Erfinder : **Ude, Werner, Dr.**
**Falkenstrasse 10**
**D-6100 Darmstadt-Arheilgen (DE)**
Erfinder : **Wunderlich, Winfried, Dr.**
**Spessartring 11**
**D-6101 Rossdorf (DE)**

**EP 0 085 377 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gebiet der Erfindung

Die Erfindung betrifft schwer brennbare organische Kunststoffe mit sehr hoher Zersetzungstemperatur und einer Glastemperatur im Bereich von 100-250 °C sowie ein Verfahren zu ihrer Herstellung.

Stand der Technik

Aus der DE-A 29 25 206 sind Polyesterphosphonate mit einem Molekulargewicht zwischen 11 000 und 200 000 bekannt, welche gemischte Polyester aus einem aromatischen Diol, einer aromatischen Dicarbonsäure und einer Phosphonsäure darstellen. Sie haben eine Zersetzungstemperatur über 300 °C und sind schwer brennbar bis unbrennbar. Durch Wasser oder Alkalien werden sie bei hoher Temperatur teilweise hydrolysiert und dadurch zu Oligomeren gespalten. Diese Hydrolyseempfindlichkeit begrenzt die Einsatzmöglichkeiten dieser Polymeren.

Aus einer Arbeit von S. Hashimoto, I. Furokawa und K. Ueyama, Journal of Makromol. Sci. Chem. A 11 (12) Seiten 2167-2176 (1977) sind phosphorhaltige aromatische Polyäther bekannt, die durch Polykondensation von Bis (p-chlorphenyl) phenylphosphinoxid mit aromatischen Diolen in Gegenwart von Alkali hergestellt worden sind. Die Polyäther hatten ein verhältnismäßig niedriges Molekulargewicht und eine reduzierte Viskosität $\eta_{sp}/c \leq 0{,}15$ dl/g. Sie bestanden zum Teil aus braunen, viskosen Ölen, zum Teil aus gummiartigen Massen oder krümeligen Pulvern. Beim Zusammensintern der festen Reaktionsprodukte entstehen Massen von geringer Festigkeit, die keine Kunststoffeigenschaften haben.

Aufgabe und Lösung

Die Hydrolyse- und Wetterbeständigkeit der bekannten schwer brennbaren phosphorhaltigen Polykondensate sollte verbessert und ihre thermische Stabilität erhöht werden. Die Aufgabe wird durch die phosphorhaltigen Polyarylenäther gemäß Anspruch 1 gelöst. Sie unterscheiden sich von den erwähnten, von Hashimoto et al. beschriebenen Verbindungen durch eine höhere reduzierte Viskosität, d. h. durch ein höheres Molekulargewicht. Überraschenderweise stellen sie Massen von erheblicher Festigkeit und typischen Kunststoffeigenschaften dar.

Gewerbliche Anwendbarkeit

Die neuen Massen lassen sich durch Verpressen bei hoher Temperatur oder durch Umformen in Thermoplastischen Zustand zu Formkörpern aller Art verformen. Insbesondere werden sie zu Folien oder Fasern verarbeitet. Diese können im thermoelastischen Zustand weiterhin zu dreidimensionalen Formkörpern umgeformt werden.

Die neuen Werkstoffe eignen sich für Einsatzgebiete, bei denen typische Kunststoffeigenschaften, wie geringes gewicht, hohe Schlagzähigkeit und Biegsamkeit verlangt werden, und wo gleichzeitig geringe oder völlig fehlende Brennbarkeit und extreme thermische Belastbarkeit gefordert werden.

Vorteilhafte Wirkungen

Gegenüber den bekannten phosphorhaltigen polyarylenäthern unterscheiden sich die neuen Massen dadurch, daß sie echte Kunststoffeigenschaften haben, die ihren Einsatz als technischen Werkstoff ermöglichen. Gegenüber den bekannten Werkstoffen auf Basis von Polyesterphosphonaten zeichnen sie sich durch erhöhte Hydrolysebeständigkeit und erhöhte thermische Stabilität aus. Thermogravimetrische Untersuchungen und DSC (Differential Scanning Calorimetry)-Messungen ergeben übereinstimmend eine Zersetzungstemperatur von etwa 500 °C.

Eigenschaften der neuen Stoffe

Es wurde festgestellt, daß die neuen phosphorhaltigen Polyarylenäther nur dann die gewünschten Kunststoffeigenschaften haben, wenn sie eine reduzierte Viskosität von wenigstens 0,25 dl/g haben. Vorzugsweise liegt die reduzierte Viskosität oberhalb von 0,3 dl/g und besonders bevorzugt im Bereich von 0,4 bis 2 dl/g. Diesen Bereichen der reduzierten Viskosität entsprechen Molekulargewichte von mindestens 10 000, vorzugsweise 15 000 bis 500 000.

Die Verbindungen sind schwer brennbar bzw. unbrennbar, wenn sie einen Phosphorgehalt von mindestens 2 Gew.-% aufweisen. Vorzugsweise liegt der Phosphorgehalt im Bereich von 4 bis 11 %. Die Brennbarkeit wird weiterhin herabgesetzt, wenn chlorierte oder bromierte Aromaten am Aufbau der Polyäther beteiligt sind.

Herstellung der Polyarylenäther

Es wurde gefunden, daß phosphorhaltige Polyarylenäther mit dem erforderlichen Mindestwert der reduzierten Viskosität durch Polykondensation eines bifunktionellen Phosphins bzw. Phosphinoxids der Formel I mit einer bifunktionellen aromatischen Verbindung II hergestellt werden können, wenn jeweils die Hälfte der funktionellen Gruppen X Fluoratome und die andere Hälfte Hydroxylgruppen sind. Die Polykondensation dürfte in der Weise vonstatten gehen, daß zunächst die aromatischen Hydroxylgruppen mit der äquivalenten Menge Alkali in das entsprechende Alkalisalz übergehen. Diese reagieren mit der fluorierten Verbindung unter Abspaltung von Alkalifluorid gemäß nachstehendem Formelschema :

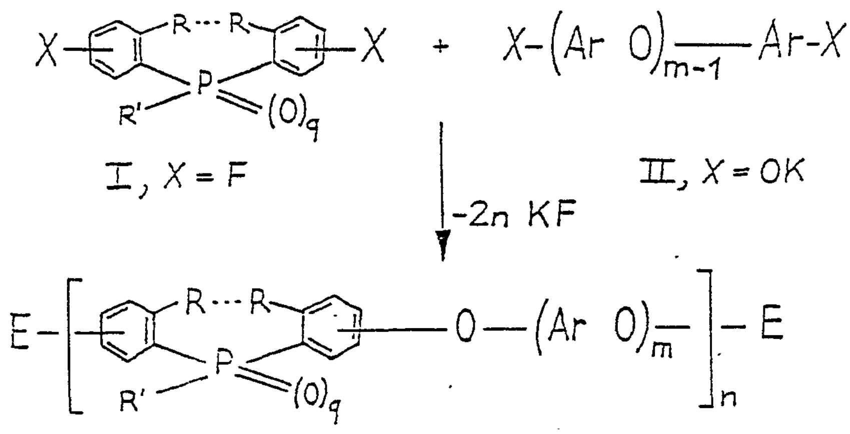

I, X = F

II, X = OK

III

Die Bedeutung von R, R', Ar, E, m und q ist im Anspruch 1 erläutert. n ist eine dem Polykondensationsgrad des erhaltenen Polyarylenäthers entsprechende Zahl, bzw. ein Mittelwert von mindestens 10. In analoger Weise können ein Phosphin bzw. Phosphinoxid I mit X = OH und eine Verbindung II mit X = F umgesetzt werden. Wenn ein streng alternierender Aufbau aus den Einheiten entsprechend I und II angestrebt wird, werden symmetrische Verbindungen I und II eingesetzt, in denen die Gruppen X jeweils gleich sind ; d. h. ein Difluorid wird mit einem Diol umgesetzt. Unsymmetrische Verbindungen IV und V könnten statistisch und — je nach der Reaktivität der funktionellen Gruppen — mit einer mehr oder weniger breiten chemischen Verteilung cokondensieren.

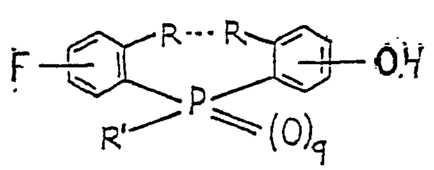

IV

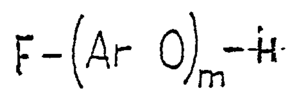

V

Das Produkt III mit m = 0 ist durch Polykondensation von IV allein oder durch Umsetzung von I(X = F) mit I(X = OH) zugänglich.

Die Umsetzung wird zweckmäßig bei erhöhter Temperatur in einem geeigneten Lösungsmittel durchgeführt. Das Lösungsmittel sollte vorzugsweise sowohl die Ausgangsstoffe als auch das entsprechende Polykondensat lösen können, während das Alkalifluorid ungelöst bleiben sollte. Es läßt sich dann aus der Reaktionslösung durch Filtrieren oder Zentrifugieren entfernen.

Beispiele geeigneter Lösungsmittel sind Chlorbenzol und N-Methylpyrrolidon. Die Kondensation kann bei 100 bis 300 °C, vorzugsweise bei 120 bis 200 °C durchgeführt werden. Die Kondensationsbedingungen werden solange aufrechterhalten, bis durch fortschreitende Kondensation der erforderliche Mindestwert der reduzierten Viskosität erreicht ist. Dazu ist ein sehr hoher Umsatzgrad erforderlich. In der Regel wird eine nahezu vollständige Umsetzung der funktionellen Gruppen angestrebt. Dafür werden Reaktionszeiten von 2 bis 10 Stunden, manchmal auch darüber, benötigt.

Um den erwünschten Polykondensationsgrad n zu erreichen, ist es notwendig, daß in dem eingesetzten Ausgangsgemisch die Fluoratome und Hydroxylgruppen möglichst genau im stöchiometrischen Verhältnis 1 : 1 vorliegen, während das Alkali in einem begrenzten Überschuß eingesetzt werden kann. Weiterhin müssen die bifunktionellen Ausgangsstoffe in hoher Reinheit eingesetzt werden. Nebenbestandteile, die an der Kondensationsreaktion teilnehmen können, aber nicht bifunktionell sind,

sollen möglichst weniger als 0,1 und vorzugsweise weniger als 0,01 Gew.-% der Ausgangsstoffe I und II ausmachen.

Geht man von symmetrischen Ausgangsstoffen I und II aus, so können auch diese in jedem gewünschten Mischungsverhältnis eingesetzt werden, sofern die Bedingung eingehalten wird, daß die Zahl der funktionellen Fluoratome und Hydroxylgruppen äquivalent bleibt.

Beispielsweise kann die Difluorkomponente aus mehreren Verbindungen bestehen, die zum Teil der Struktur I und zum anderen Teil der Struktur II angehören. Das gleiche gilt für die Dihydroxy-Komponente. Werden ausschließlich Komponenten der Struktur I eingesetzt, so hat in dem Endprodukt der Formel III m den Wert 0. Wenn die Komponenten der Struktur I stöchiometrisch überwiegen, hat m einen Mittelwert zwischen 0 und 1. Wenn dagegen die Komponenten der Struktur II überwiegen, stellt m einen Mittelwert über 1 dar und kann einen Wert bis 10 erreichen. Bei Werten über 10 würde der Einfluß der Einheiten mit der Struktur I zu gering und die vorteilhaften Eigenschaften würden nicht in ausreichendem Maße erreicht.

Als Kondensationsmittel eignen sich alle stark basischen Alkaliverbindungen, die das bei der Kondensation abgespaltene HF in Form eines Alkalifluorids binden. Geeignet sind z. B. Oxide, Hydroxyde oder Carbonate der Alkalimetalle. Bevorzugt sind Natrium- oder Kalium-Verbindungen, insbesondere deren Carbonate. Diese Komponente sollte in möglichst feinteiliger Form eingesetzt werden.

Während der Kondensation scheidet sich festes Alkalifluorid aus. Dieses wird aus der Lösung des Polyäthers durch Filtrieren entfernt. Durch Abdestillieren des Lösungsmittels kann das Polykondensat in reiner Form gewonnen werden.

Vorzugsweise werden symmetrische Verbindungen I und II im exakt stöchiometrischen Verhältnis 1 : 1 eingesetzt, insbesondere I mit X = F und II mit X = OH. Dabei werden streng alternierende Produkte III erhalten, in denen m in der Regel den Wert 1 hat. m kann auch einen einheitlichen oder mittleren Wert über 1 haben, wenn eine entsprechende Ausgangsverbindung eingesetzt wird, beispielsweise ein oligomeres Polyphenylenoxid. Man kann von diesem Aufbau in jeder gewünschten Weise abweichen und Kondensationsprodukte III herstellen, in denen die Einheiten der Struktur I oder die der Struktur II überwiegen. Dies gelingt z. B. durch Cokondensation von unsymmetrischen Ausgangsstoffen IV und V im gewünschten Mischungsverhältnis.

## Das Phosphin oder das Phosphinoxid

Unter den phosphorhaltigen Ausgangskomponenten I sind Derivate des Methyl-diphenylphosphins und insbesondere des Triphenylphosphins, also Verbindungen mit R' = Methyl oder Phenyl, bevorzugt. Verbindungen I, in denen R' einen anderen Alkylrest als Methyl oder einen anderen Arylrest als Phenyl oder einen Alkoxyrest (insbesondere mit 1 bis 4 C-Atomen) oder einen Aryloxyrest (insbesondere Phenyloxy) oder Chlormethyl darstellt, sind verwendbar, aber technisch weniger leicht zugänglich. Die in der Hauptkette angeordneten Phenylreste können in den ortho-Stellungen durch eine Brücke verknüpft sein, die in Formel I mit R---R symbolisiert ist. Die Brücke R---R kann aus jedem der unter R" genannten Glieder, einschließlich einer Einfachbindung zwischen den beiden ortho-Kohlenstoffatome der Phenylgruppen bestehen. In dem Fall, daß R---R eine Einfachbindung ist, ist das Phosphoratom in einem Fünfring zwischen den Phenylresten angeordnet. In allen anderen Fällen, in denen R---R eine der unter R" angegebenen Bedeutungen hat, sind die ortho-Kohlenstoffatome über eine eingliedrige Brücke verbunden, die zusammen mit den Phenylresten und dem Phosphoratom einen Sechsring bildet. Als Brücke R---R ist eine Einfachbindung oder ein Sauerstoffatom bevorzugt, jedoch kann es auch eine Sulfon-, Carbonyl-, Methylen- oder Isopropylidengruppe sein. Besonders bevorzugt sind die Ausgangsverbindungen I, in denen keine Brücke besteht und R jeweils ein Wasserstoffatom darstellt.

Phosphinoxide, in denen q = 1 ist, sind gegenüber den Phospinen, in denen q = 0 ist und die sich z. B. durch Reduktion aus den entsprechenden Phosphinoxiden herstellen lassen, im allgemeinen bevorzugt. Das gilt besonders für die Verbindungen, in denen R' eine Methyl- oder Phenylgruppe darstellt und R jeweils ein Wasserstoffatom ist.

Die Gruppen X, insbesondere die F-Atome, stehen vorzugsweise in p-Stellung zu dem an das Phosphoratom gebundenen C-Atom. Die bevorzugten Vertreter der Verbindung I sind Di-(4-fluorphenyl)-phenyl-phosphinoxid und Di-(4-fluorphenyl)-methyl-phosphinoxid.

Die bifunktionelle aromatische Verbindung II kann durch die Formel $X\text{-}(Ar\text{-}O)_{m-1}\text{-}Ar\text{-}X$ (II) repräsentiert werden. Ar kann einen zweiwertigen Arylenrest darstellen, z. B. eine p-Phenylen-, m-Phenylen-, 1,4-Naphthylen- oder 1,5-Naphthylengruppe. Für Verbindungen mit m > 1 kommt für Ar vor allem eine p-Phenylengruppe und X = OH in Betracht. II ist dann ein oligomeres Polyphenyloxid oder ein entsprechendes Oligomerengemisch. Im letztgenannten Fall steht m für den Mittelwert des Oligomerisierungsgrades. Besonders bevorzugt ist Di-(p-hydroxyphenyl)-äther. Ar kann auch eine Struktur der Formel

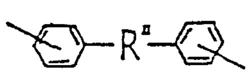

sein. In diesem Falle kommen im wesentlichen Verbindungen II mit m = 1 in Betracht, wobei die freien Valenzen vorzugsweise in p-Stellung zu R" stehen. R" repräsentiert im einfachsten Fall eine kovalente

Einfachbindung zwischen den Phenylresten. Andere mögliche Bedeutungen von R" sind die Sulfid- und Sulfongruppe und insbesondere die Carbonyl-, Methylen-, oder Isopropylidengruppe oder ein anderer difunktioneller Rest, der 5 bis 15 C-Atome und eine Zahl von H-Atomen enthält, die höchstens gleichgroß wie die Zahl der C-Atome ist.

Beispiele für symmetrische Verbindungen vom Typ II mit X = OH sind Hydrochinon, Resorcin, 1,4-Dihydroxynaphthalin, 1,5-Dihydroxynaphthalin, 4,4'-Dioxydiphenyl und die als Bisphenol A und F bekannten Verbindungen. Als Beispiele für Verbindungen mit X = F seien 4,4'-Difluorbenzophenon, Bis-(4)fluorphenyl)-sulfon und 4,4'-Difluordiphenyläther genannt.

Die Endgruppen können nichtumgesetzte Fluoratome oder Hydroxylgruppen sein. Die letzteren wirken sich nachteilig auf die Eigenschaften der Polyarylenäther aus und werden deshalb vorzugsweise mit Methylchlorid veräthert. Stattdessen kann man auch andere Alkylierungs-, Arylierungs- oder Acylierungsmittel einsetzen.

## Beispiele

Die nachfolgenden Beispiele zeigen bevorzugte Herstellungsverfahren für die erfindungsgemäßen phosphorhaltigen Polyarylenäther.

### Beispiele 1-6

0,1 Mol des entsprechenden Arylendiols, 0,1 Mol Di-(fluorphenyl)-phenylphosphinoxid und 0,105 Mol Kaliumcarbonat (wasserfrei) wurden in 150 g N-Methylpyrrolidon und 50 g Chlorbenzol gelöst. Unter Argon-Atmosphäre wurde auf ca. 180 °C aufgeheizt und das Azeotrop aus dem Reaktionswasser und Chlorbenzol ausgekreist. Gleichzeitig entweicht $CO_2$. Gegen Ende der Wasserabspaltung nach etwa 2 Stunden bei Reaktionstemperatur zur Entfernung des restlichen Wassers innerhalb von einer Stunde werden weitere 50 g Chlorbenzol zugetropft. Die endgültige Kondensation erfolgte anschließend innerhalb von 5-10 Stunden bei 180-200 °C unter Argon-Atmosphäre. Die Kondensation wurde durch 30-minütiges Einleiten von Methylchlorid bei 160-180 °C abgebrochen. Die viskosen Reaktionsgemische wurden nach dem Abkühlen mit Tetrahydrofuran verdünnt, der anorganische Niederschlag abfiltriert und der Polyäther im Filtrat mit einem Methanol-Wasser-Gemisch ausgefällt. Die elementaranalytischen Daten der bei 100 °C bis zur Gewichtskonstanz getrockneten Polykondensate standen in guter Übereinstimmung mit den theoretisch berechneten Werten.

(Siehe Tabelle Seite 6 f.)

| Beispiel Nr. | Arylendiol | $T_g$ nach DSC[4] [°C] | $T_z$ nach TGA[1] [°C] | CR-Wert[2] [%] | P-Gehalt [%d.Th.] | Reduzierte Viskosität $\eta_{sp}/c$[3] [dl/g] |
|---|---|---|---|---|---|---|
| 1 | Hydrochinon | 185 | > 450 | 31,7 | 8,07 | 0,28 |
| 2 | 4,4'-Dioxydiphenyl | 155 | > 450 | 37,9 | 6,74 | 0,41 |
| 3 | 1,5-Dioxynaphthalin | | > 450 | 36,2 | 7,14 | 0,33 |
| 4 | 4,4'-Dioxydiphenyläther | 170 | 490 | 32,8 | 6,51 | 0,32 |
| 5 | Bisphenol A | 180 | > 450 | 24,9 | 6,18 | 0,37 |
| 6 | 4,4'-Dioxytriphenyl-phosphinoxid | 215 | > 450 | 40,8 | 10,62 | 0,31 |

1) Abbaubeginn nach Thermogravimetrie ($N_2$)
2) Pyrolyserückstand nach 30 Min. bei 800°C unter $N_2$
3) c = 0,5 g/100 ml m-Cresol bei 30°C
4) Glastemperatur nach "differential scanning calorimetry"

Beispiel 7

Unter analogen Herstellungsbedingungen von Beispiel 1-6 (10 Stunden Reaktionszeit bei 180-200 °C) werden 0,05 Mol Di-(p-hydroxyphenyl)-phenylphosphinoxid mit 0,05 Mol 4,4'-Difluorbenzophenon in Gegenwart von 0,052 5 Mol Kaliumcarbonat umgesetzt. Der erhaltene Polyäther ergab feste, flexible, transparente Gießfolien (aus Chloroform) und Preßplättchen ; er hatte eine reduzierte Viskosität von 0,47 dl/g.

Beispiel 8

Unter analogen Reaktionsbedingungen wie in Beispiel 1 bis 6 wurden 0,05 Mol Phenolphthalin mit 0,05 Mol Di-(para-fluorphenyl)-phenylphosphinoxid in Gegenwart von 0,053 Mol Kaliumcarbonat umgesetzt (5 Stunden bei 180-190 °C). Der isolierte Polyäther hatte eine Glastemperatur von 260 °C ; eine Zersetzungstemperatur > 450 °C, einen CR-Wert von 55 % und eine reduzierte Viskosität von 0,56 dl/g. Es wurden feste, transparente, flexible Gießfolien aus Chloroform erhalten.

**Patentansprüche**

1. Phosphorhaltige Polyarylenäther der Struktur

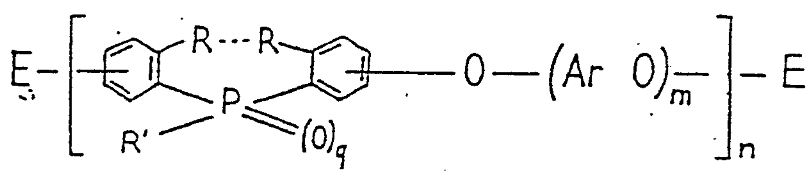

worin Ar eine Phenylen- oder Naphthylengruppe oder die Gruppe

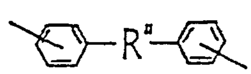

R jeweils ein Wasserstoffatom oder zusammengenommen ein Sauerstoffatom oder eine der unter R" genannten Gruppen,

R' eine Alkyl, Chlormethyl-, Aryl-, Alkoxy- oder Aryloxygruppe,

R" eine kovalente Einfachbindung, ein Schwefelatom, eine Sulfon-, Carbonyl-, Methylen- oder Isopropyliden-Brückengruppe oder ein anderer difunktioneller Rest ist, der 5 bis 15 C-Atome und eine höchstens gleichgroße Zahl von H-Atomen enthält.

E gleiche oder verschiedene Endgruppen, bestehend aus Wasserstoff, Halogen, Alkyl, Aryl bzw. Alkoxyl, Alkoyl bzw. Oxyalkoyl,

m einen Mittelwert im Bereich von 0 bis 10,

n einen Mittelwert von mindestens 10,

q 0 oder 1,

bedeuten, gekennzeichnet durch eine reduzierte Viskosität $\eta_{sp}/c \geq 0,25$ dl/g, wobei c = 0,5 g/100 ml m-Cresol bei 30 °C.

2. Phosphorhaltige Polyarylenäther gemäß Anspruch 1, dadurch gekennzeichnet, daß R' eine Methyl- oder Phenylgruppe ist.

3. Phosphorhaltige Polyarylenäther gemaß Anspruch 2, dadurch gekennzeichnet, daß R---R eine kovalente Einfachbindung oder ein Sauerstoffatom symbolisieren.

4. Phosphorhaltige Polyarylenäther gemäß Anspruch 2, dadurch gekennzeichnet, daß R ein Wasserstoffatom symbolisiert und q = 1 ist.

5. Phosphorhaltige Polyarylenäther gemäß Anspruch 4, dadurch gekennzeichnet, daß Ar eine Phenylengruppe ist und m einen Wert von 1 bis 10 bedeutet oder daß Ar eine Gruppe

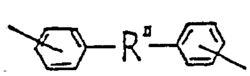

darstellt, wobei m = 1 und R" eine kovalente Einfachbindung oder eine Sulfonyl-, Carbonyl-, Methylen- oder Isopropylidengruppe oder ein anderer difunktioneller Rest ist, der 5 bis 15 C-Atome und eine höchstens gleichgroße Zahl von H-Atomen enthält.

6. Verfahren zur Herstellung phosphorhaltiger Polyarylenäther nach den Ansprüchen 1 bis 5 durch Polykondensation eines bifunktionellen Phosphins bzw. Phosphinoxids I, gegebenenfalls zusammen mit

einer bifunktionellen aromatischen Verbindung II, in Gegenwart einer zu den Gruppen X mindestens halb äquivalenten Menge Alkali bei erhöhter Temperatur

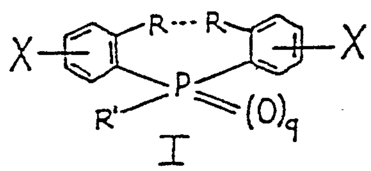

I

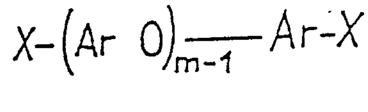

II

wobei R, R', Ar und q die im Anspruch 1 angegebene Bedeutung haben, dadurch gekennzeichnet, daß die in den Formeln I und II mit X bezeichneten Gruppen zur Hälfte aus Fluoratomen und zur anderen Hälfte aus Hydroxylgruppen bestehen.

7. Verfahren nach Anspruch 6, dadurch gekennzeichnet, daß symmetrische Verbindungen der Formeln I und II eingesetzt werden, in denen die Gruppen X jeweils gleich sind.

8. Verfahren nach Anspruch 7, dadurch gekennzeichnet, daß ein Phosphin bzw. Phosphinoxid mit X = F und eine Verbindung I und/oder II mit X = OH eingesetzt werden.

## Claims

1. Phosphorus-containing polyarylene ethers of the structure

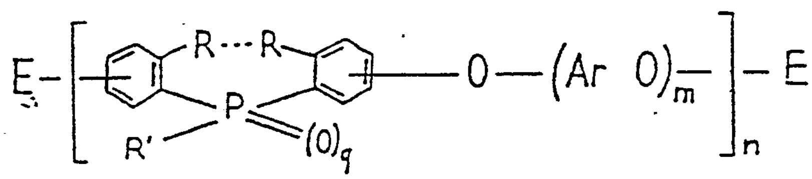

wherein Ar represents a phenylene or naphthylene group or the group

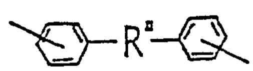

R in each case represents a hydrogen atom or together they represent an oxygen atom or one of the groups specified under R",

R' represents an alkyl, chloromethyl, aryl, alkoxy or aryloxy group,

R" represents a covalent single bond, a sulphur atom, a sulphone, carbonyl, methylene or isopropylidene bridge group or another bifunctional group which contains 5 to 15 carbon atoms and at most the same number of H atoms,

E represents identical or different terminal groups consisting of hydrogen, halogen, alkyl, aryl or alkoxy, alkoyl or oxyalkoyl,

m represents an average value in the range from 0 to 10,

n represents an average value of at least 10,

q represents 0 or 1,

characterised by a reduced viscosity $\eta_{sp}/c \geqslant 0.25$ dl/g, wherein c = 0.5 g/100 ml m-cresol at 30 °C.

2. Phosphorus-containing polyarylene ethers as claimed in claim 1, characterised in that R' is a methyl or phenyl group.

3. Phosphorus-containing polyarylene ethers as claimed in claim 2, characterised in that R---R represent a covalent single bond or an oxygen atom.

4. Phosphorus-containing polyarylene ethers as claimed in claim 2, characterised in that R represents a hydrogen atom and q = 1.

5. Phosphorus-containing polyarylene ethers as claimed in claim 4, characterised in that Ar is a phenylene group and m represents a value from 1 to 10 or in that Ar represents a group

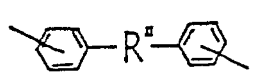

wherein m = 1 and R" represents a covalent single bond or is a sulphonyl, carbonyl, methylene or isopropylidene group or another bifunctional group which contains 5 to 15 carbon atoms and at most the same number of H atoms.

6. Process for preparing phosphorus-containing polyarylene ethers as claimed 1 to 5 by the polycondensation of a bifunctional phosphine or phosphine oxide I, optionally together with a

bifunctional aromatic compound II, in the presence of a quantity of alkali which is at least half equivalent to the groups X at elevated temperature

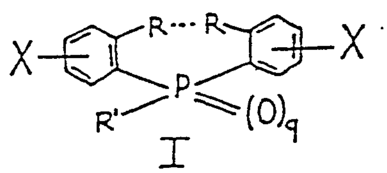

I

$$X-(Ar\ O)_{m-1}-Ar-X$$

II

wherein R, R', Ar and q are defined as in claim 1, characterised in that the groups designated X in formulae I and II consist half of fluorine atoms and half of hydroxyl groups.

7. Process as claimed in claim 6, characterised in that symmetric compounds of formulae I and II are used wherein the groups X are identical.

8. Process as claimed in claim 7, characterised in that a phosphine or phosphine oxide wherein X = F and a compound I and/or II wherein X = OH are used.

**Revendications**

1. Polyesters aryléniques phosphorés de structure

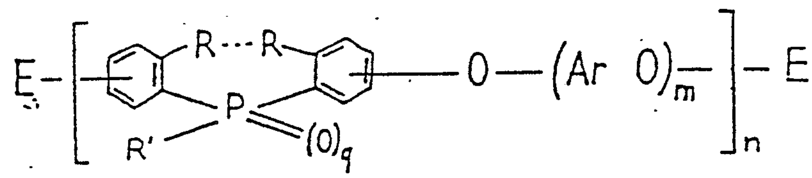

dans laquelle Ar représente un groupe phénylène ou naphtylène ou le groupe

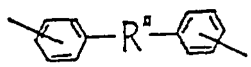

les symboles R représentent individuellement un atome d'hydrogène ou conjointement un atome d'oxygène ou l'un des groupes cités pour R",

R' représente un groupe alkyle, chlorométhyle, aryle, alcoxy ou aryloxy,

R" représente une liaison simple covalente, un atome de soufre, un groupe-pont sulfone, carbonyle, méthylène ou isopropylidène ou un autre radical bifonctionnel qui contient 5 à 15 atomes de C et un nombre égal au maximum d'atomes de H, .

E représente des groupes terminaux semblables ou différents, constitués par un hydrogène, un halogène, un alkyle, un aryle ou alcoxyle, un alcoyle ou oxyalcoyle,

m a une valeur moyenne comprise entre 0 et 10,

n a une valeur moyenne d'au moins 10,

q est égal à 0 ou 1,

caractérisés par une viscosité réduite $\eta_{sp}/c \leq 0{,}25$ dl/g, avec c =0,5 g/100 ml de m-crésol à 30 °C.

2. Polyéthers aryléniques phosphorés selon la revendication 1, caractérisés en ce que R' est un groupe méthyle ou phényle.

3. Polyéthers aryléniques phosphorés selon la revendication 2, caractérisés en ce que R---R symbolise une liaison simple covalente ou un atome d'oxygène.

4. Polyéthers aryléniques phosphorés selon la revendication 2, caractérisés en ce que R symbolise un atome d'hydrogène et q = 1.

5. Polyéthers aryléniques phosphorés selon la revendication 4, caractérisés en ce que Ar est un groupe phénylène et m a une valeur de 1 à 10 ou en ce que Ar représente un groupe

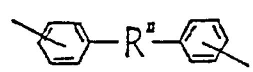

m étant égal à 1 et R" étant une liaison simple covalente, un groupe sulfone, carbonyle, méthylène ou isopropylidène ou un autre radical bifonctionnel qui contient 5 à 15 atomes de C et un nombre égal au maximum d'atomes de H.

6. Procédé pour la préparation de polyéthers aryléniques phosphorés selon l'une quelconque des revendications 1 à 5, par polycondensation d'une phosphine ou d'un oxyde de phosphine bifonctionnel I, le cas échéant avec un composé aromatique bifonctionnel II, en présence d'une quantité d'alcali au moins demi-équivalente aux groupes X, à température élevée

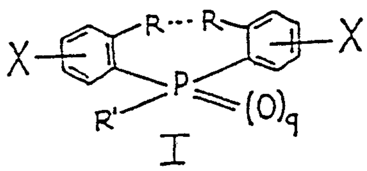

I

$$X-(Ar\ O)_{m-1}-Ar-X$$

II

R, R', Ar et q ayant les significations données dans la revendication 1, caractérisé en ce que les groupes désignés par X dans les formules I et II sont composés par moitié d'atomes de fluor et, pour l'autre moitié, de groupes hydroxyle.

7. Procédé selon la revendication 6, caractérisé en ce qu'on met en réaction des composés symétriques de formules I et II, dans lesquels les groupes X respectifs sont semblables.

8. Procédé selon la revendication 7, caractérisé en ce qu'on met en réaction une phosphine ou un oxyde de phosphine dans lequel X = F et un composé I et/ou dans lequel X = OH.